# EUROPEAN PATENT SPECIFICATION

(11) **EP 2 482 201 B1**
(45) Date of publication and mention of the grant of the patent: **21.08.2013**
(21) Application number: 11152457.5
(22) Date of filing: 28.01.2011
(51) Int. Cl.: G06F 17/30

(54) **Enabling information exchange while switching between web-pages**
Informationsaustauschaktivierung während des Umschaltens zwischen Webseiten
Activation d'échange d'informations en passant d'un site Web à l'autre

(43) Date of publication of application: 01.08.2012
(73) Proprietor: Siemens Aktiengesellschaft, 80333 München (DE)
(72) Inventor: Giusti, Nadia, 16043, Chiavari (GE) (IT); Borriello, Diego, 16043, Chiavari (IT)
(74) Representative: Fischer, Michael

(56) References cited:
- WO-A1-2007/068520
- US-A1- 2004 193 699

## Description

The present invention relates to a method and to a system for enabling information exchange while switching between web-pages according to the preambles of claims 1 and 4 respectively.

Web-page developers who have to build a .NET web application usually are developing web-pages which can be navigated by end-users according to one of the two following navigation schemas:
1. a "drill-down" navigation schema, where web pages are organized in a hierarchical way, which is the typical scenarios where the end-user has to drill down into information that are strictly inter-connected and that are represented into a well defined set of web pages that must be loaded in a precise sequence.
2. a "free-hand" navigation schema, where the user can navigate among screens that are not linked a-priori

In the drill-down navigation schema, where the navigation between web-pages is predefined, particularly challenging is for the web-developers to manage the way information, i.e. parameters and data, are exchanged while switching from one page to the other.

Let us consider the example of a web-form which needs to be filled-in by an end-user in a drill-down navigation schema. When the web-page is visualized by the user for the first time it starts at a so called "zero-state", i.e. before scrolling, and then the user may scroll the page and may fill in some requested data. The appended data to the form page exist but are not elaborated until a click is performed. ..

When the user clicks to continue, he/she reaches another web-page, the page which follows, and data are elaborated. Usually, in known techniques, data are elaborated from one page to the following one via a custom method developed by the web-developer, e.g. a "query string".

As used here-in, the term "source page" is denoting the calling page and the term "target page" is denoted the called page which is called from the calling page.

Patent publication WO 2007/068520 A1 discloses a method for serializing navigational state of A portal into a URL.

A drawback of using a query string for parameter/data transfer is that the information is available only in the target page and it is explicitly stored in the URL with an evident problem of security.

There are other known techniques for exchanging data between web pages. For example, with the technique "getting post information from the source page", values of hidden fields are used, such as _VIEWSTATE, _EVENTTARGET, and _EVENTARGUMENT, used for internal processing in the page. Unfortunately, with this technique it is possible to get only the post values and the values of arbitrary controls on the source page cannot be read.

Moreover, in known techniques, parameters are usually stored in the session as global variables. Unfortunately, in this way, parameters are not contextualized depending on the page the user is navigating, but being global variables, the value of a parameter is the last stored value. The drawback is that, in a drill-down navigation schema, where pages may be in a flow with a target page source being source of the target page that follows, it is desirable that a variable have a contextualized value depending on where the user is navigating and not depending only on the last stored value.

A typical requirement which web-developers have to take into account is that, when the user activates a back-button from the target page in order to return to the source page, it is typically desired that the user is able to go back to the state of the source page where the user can see the last data he/she filled in. This requirement and other requirements fall under the known concept of "smart-navigation".

For example, in earlier versions of ASP.NET, it was possible to use the "Page.SmartNavigation" property in order to profit of some smart navigation features.

In fact, the Page.SmartNavigation property enhanced web pages performances by basically doing the following:
- the scroll position of a web page was maintained after postback
- the element focus on a Web page was maintained during navigation
- only the most recent Web page state was retained in the Web browser history folder

However, even with the previously supported Page.SmartNavigation property, no technique for performing standardized parameter management was provided.

In any case, the Page.SmartNavigation property is now deprecated due to the fact that it did not work with web-browsers different from Internet explorer (e.g. Netscape, Opera or Safari).

In view of this, it is desirable for page-developers, working with a .Net Web application, to be supported with a framework for performing standardized parameter management in predefined page navigation schemas, such as a drill-down navigation schema.

Instead, so far, web-developers have been confronted with the challenge of addressing these needs on a developer teams basis, using custom solutions, with the obvious drawbacks of increasing development and customization efforts and reducing the usability of the delivered web pages

It is therefore the aim of the present invention to overcome the above mentioned drawbacks, in particular by providing a method and a system for enabling information exchange while switching between a source page and a target page in a drill-down navigation schema which minimizes development and customization efforts.

The aforementioned aim is achieved by a method and a system enabling information exchange while switching between a source page and a target page in a drill-down navigation schema, developed with a .NET web application, wherein the target page can be loaded, at run-time, when the end-user activates a next-page button located inside the source page and wherein the source page can be re-loaded, when, at run-time, the end-user activates the back-page button located inside the target page;
the invention comprising:
- providing a service, in form of a class library to be configured at page developing time, for managing information for smart navigation between the source page and the target page, herein after called smart navigation service;
- the smart navigation service being located, at run-time, in a given user-session and being able, upon-events, to collect, store and provide required smart navigation information from and/or to the web-pages of the given user-session; wherein the smart navigation information comprising: parameter data, navigation status data and user data;
at page-developing time, configuring the smart navigation service with the following:
- within the source and target pages, initializing the smart navigation service using user data;
- within the source page, providing to the smart navigation service a first set of parameter data to be collected and stored;
- within the target page, requiring, from the smart navigation service, a second set of parameter data to be utilized on the target page to be loaded,
at run time, the following is performed:
- by the smart navigation service, collecting and storing the values of the first set of parameter from the source page according to end-user selection;
- when the end-user switches from the source page to the target page by activating the next page button, the two following sub-sub steps are performed:
   ○ by the smart navigation service collecting and storing navigation status data from the source page;
   ○ loading the target page with a desired view depending on the value of the second set of parameter data provided by the smart navigation service,
- if the end-user switches back from the target page to the source page by activating the back page button, loading the source page with a desired view depending on the value of the first set of parameter data and of the status navigation data previously collected from the source page, both data being provided by the smart navigation service.

In invention embodiments, a template web-page for the creation of source and target pages may advantageously be provided including custom configurations like the next page button, the back page button and the initialization of the smart navigation service.

In invention embodiments, the smart navigation service may conveniently store the smart navigation information in the given user session or in a repository.

Furthermore, a computer program element can be provided, comprising computer program code for performing steps according to the above mentioned method when loaded in a digital processor of a computing device.

Additionally, a computer program product stored on a computer usable medium can be provided, comprising computer readable program code for causing a computing device to perform the mentioned method.

Embodiments of the proposed invention allow page developers to build a .NET web application to have predefined navigation schemas between web pages with a software framework for standardized parameter management.

With invention embodiments, the usability of web pages is increased. In fact, for example, the target page may be filtered as wished in order to avoid the display of unnecessary information to the end-user and by having a target page populated with a selection of desired information.

With invention embodiments, information can be exchanged in a secure manner.

Moreover, invention embodiments do not interfere with a free hand navigation schema.

The invention will now be described in preferred but not exclusive embodiments with reference to the accompanying drawing, wherein:

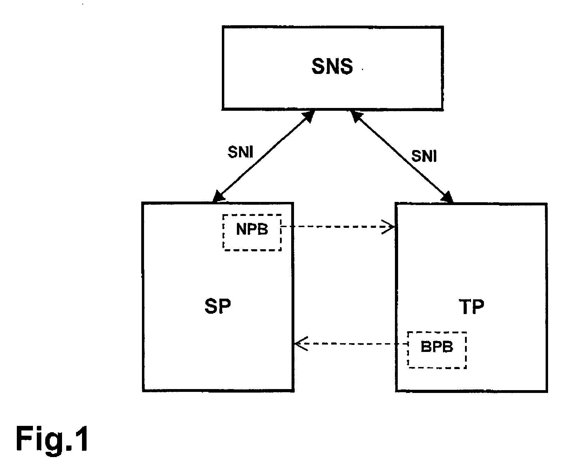

- Figure 1: block diagram which schematically illustrates a smart navigation service exchanging information with web-pages in accordance with an example embodiment of the present invention.

In accordance with the invention, a source and a target page are developed with a .NET web application in a drill-down navigation schema, where there is a switching between a source page and a target page, which may be in both-directions, and where there is a need of information exchange during this switching.

The target page can be loaded, at run-time, when the end-user activates a next-page button located inside the source page. Moreover, if the end-user activates the back-page button located inside the target page at run time, the source page can be re-loaded, and in this case it may be also denoted, for simplicity, as source-back page. In Figure 1 are shown the next-page button NPB and the back page button BPB respectively located in the source page SP and in the target page TP. One of this two buttons NPB, BPB is activated by the end-user when she/he requests a switching between web-pages, either by performing a click on a control designed by the page-developer (e.g. a continue button in wizard) or by calling the corresponding event provided by the service in a custom way, e.g. by entering a given key in the keyboard.

In order to manage the information exchange for smart navigation purposes between the source page SP and the target page TP, a service is provided which is called smart navigation service SNS and it is schematically shown in Figure 1. The smart navigation service SNS is in form of a class library to be configured at page developing time and it is located, at run time, in a given user session.
The smart navigation service SNS is able, upon-events, to collect, store and provide required smart navigation information SNI from and/or to the web-pages SP, TP of the given user-session. The exchanged smart navigation information comprises: parameter data, navigation status data and user data.

As used herein, the term "parameter data" denotes the parameter information exchanged between the smart navigation service SNS and the web-page SP, TP. For example, the parameter data may include the information that the page developer wishes to be stored from the source page SP and be available in the target page TP, where the items may be selected from a combo box or from a grid at run-time by an end-user. In another example, the parameter data may include the information that the page developer wishes to be available in the target page TP, this information may be coming from information previously stored and may be depending on user data.

As used herein, the term user data denotes information on the user. In a simple case scenario, in order to avoid any confusion, the user data may be only an identifier. Instead, when security issues are considered important other identification user data may be needed such as a user name, password, computer name, session-ld and so on.

As used herein, the term "navigation status data" denotes the information on the current status of the page in the drill down navigation schema.

The smart navigation service SNS is an intelligent context since it is able, once interrogated by notifications from web-pages SP, TP belonging of the user-session, to act and provide the relevant smart navigation data SNI to the page requiring the data.

At page-developing time, the smart navigation service SNS is configured by performing the following set of actions:
1. within the source and target pages SP,TP, the smart navigation service SNS is initialized using user data;
2. within the source page SP, the smart navigation service SNS is provided with a first given set of parameter data to be collected and stored;
3. within the target page TP, requiring, from the smart navigation service SNS, a second given set of parameter data to be utilized on the target page TP to be loaded.

At run time, the following is performed:
- the smart navigation service SNS collects and stores the values of the first given set of parameter from the source page SP according to the selection performed by the end-user;
- when the end-user switches from the source page SP to the target page (TP) by activating the next page button NPB, the two following sub-sub steps are performed:
   ○ the smart navigation service SNS collects and stores navigation status data values from the source page SP;
   ○ the target page TP is loaded with a desired view depending on the values of the second given set of parameter data provided by the smart navigation service SNS,
- if the end-user switches back from the target page TP to the source page SP by activating the back page button BPB, the following sub steps may be performed:
   ○ the smart navigation service SNS may collect and store navigation status data values from the target page TP (optional sub-step);
   ○ the source page SP is loaded with a desired view depending on the values of the first given set of parameter data and status navigation data previously collected from the source page SP, both data are provided by the smart navigation service SNS.

It is noted that the second given set of parameter data to be utilized on the target page TP may depend on the selection performed by the end-user on the first given set of parameter in the source page SP. For example, advantageously, the page-developer may wish to configure that, depending on a specific selection made by the end-user in the source page SP at run-time, the target page TP is loaded, upon-request, with a specific and convenient design view, so that the target page TP is populated with a selection from some desired information. In a simple practical example, an end-user may select in a source page a set of cooking tools and of cooking ingredients he is interested in and, upon his/her click to continue, a target page is loaded comprising a list of cooking recipes which are available with his/her selection of cooking tools and ingredients. This system may be denoted with the technical terms "rich master-detail system": a group of information into the source page SP sets the contents of the target page TP and of all subsequent target pages, since a target page TP may be the source SP for another subsequent target page TP in a flow of interconnected pages.

Thus, in embodiments of the present invention, the smart navigation service SNS may also be able to access and manage the provision of information previously stored in a repository.

In invention embodiments, the target page TP may advantageously be loaded with a desired specific view depending on a flag of the source page SP and not depending on the string typed in the source page SP as it is the case in previously known techniques.

In invention embodiments, the smart navigation service SNS is able to collect, store and associate smart navigation information SNI to other previously stored information in a secure manner, for example when the end-user types an identification number typed some confidential information can be associated to it in a secure manner. Advantageously, differently than previously known techniques like queries, with invention embodiments, security sensitive data are not data explicitly dealt.

In embodiments of the invention, in order to minimize page developer's efforts, a template for the web page SP, TP may optionally be supplied, the template containing some custom configurations. For example, the page template may have custom configuration for allowing communication between the pages SP, TP and the smart navigation service SNS, for exchanging smart navigation information SNI between the web application and the service and for tracing the navigation actions of the user.
The optional template for the web page may be in form of a rich page, including pre-configurable back and forward page buttons, which automatically provide upon activation status navigation data, and it may automatically give to the smart navigation service the basic information about the user.
Without a use of an optional template page, the smart navigation service may be configured in accordance with guidelines supplied to page developer.

Conveniently, from the page developer point of view, in case the option of a template web page is implemented, the page developer has only to establish the direction of navigation, i.e. forward or backward, by configuring the custom buttons inside the template web page, and if necessary, to store some additional information parameters useful for the navigation between pages.

Thus, with invention embodiments of the invention, the end-user while navigating at run time in a drill-down navigating schema may activate the next page button NPB and navigate down in the hierarchy of web application web pages so that the called target page is loaded using smart navigation information depending on the information passed by the calling source page screen. This information may be used to pre-filter the called screen and display some text and/or graphical objects as desired.

Moreover, the end-user while navigating in a drill-down navigation schema may activate the back page button BPB up in the hierarchy of web application pages so that the called source-back page may be loaded and initialized with the status information that was available the last time it was displayed.

In embodiments of the invention, the smart navigation information, also called "context" information, may preferably be stored by the smart navigation service SNS into the web application session state, e.g. in the ASP.NET session state. Alternatively, in other embodiments of the invention, the smart navigation service SNS may save some or all of smart navigation data information SNI in a repository as for example a database.

In embodiments of the invention, the drill down navigation schema may comprise a set of web-pages in a cascade flow of source and target web pages SP, TP. For example, in a wizard type of navigation schema consisting of three web pages, the middle page may act as a target page with respect to the first page and as source page with respect to the last page.

In embodiments of the invention, from the end-user perspective, an end-user, while viewing the source page SP at run-time, may click to a virtual control labeled by the page-developer as "GO BACK" and actually activating the next page button NPB on the source page SP. Thus, the end-user may think he/she is going back to the source page SP, while in reality, without being aware, she navigates to a target page TP which resembles to the source page SP but having some additional desired enriched information.

Let us illustrate an example embodiment of the proposed invention with the support of tables Table 1 to Table 8. The example is taken from the Client Application Builder of Simatic IT, the Manufacturing Execution System provided by Siemens. SIMATIC®, the product family offered by Siemens, provides a broad range of MES products. In this particular example, the smart navigation service SNS is distributed in the form of provider and as assembly written with the .NET Framework 3.5. The smart navigation service SNS is called "MESPageContextProvider.dll" and it is part of the Siematic Client Application Builder, a framework of web controls and services for sharing information between a web-page and the Simatic IT servers.

The library contains two classes, the "NavigationContext" class for defining the smart navigation service SNS with the properties and methods listed in Table 1 and the "ParamContext" class for defining the data structure as shown in Table 2.

**Table 1**

| **NavigationContext** | |
|---|---|
| Sealed Class | |
| - Fields | |
| | ■ NavigationEntity: string |
| | ■ Page: PageContext |

| - Properties | |
|---|---|
| | ■ GoBackward {get; set;}: bool |
| | ■ GoForward {get; set;}: bool |
| | ■ IsBackward {get; set;}: bool |
| | ■ IsForward {get; set;}: bool |
| | ■ Page {get; set;}: PageContext |

| - Methods | |
|---|---|
| | ■ AddParam (string name, object value, Type type): void |
| | ■ GetParam (string name): ParamContext |
| | ■ GetParamNames(): string[] |
| | ■ GetParams(): ParamContext() |
| | ■ NavigationContext(PageContext page) |

The property GoForward of Table 1 reports to the class NavigationContext a click of the NavigationButtonNext. The property GoBackward of Table 1 reports to the class NavigationContext a click of the NavigationButtonBack. The property IsBackward of Table 1 provides the correct backward navigation. The property IsForward of Table 1 provides the correct Forward navigation.

The method AddParam of Table 1 is invoked in order to add or modify a parameter. The method GetParam of Table 1 returns a parameter. The method GetParams of Table 1 returns parameter data. The method GetParamNames of Table 1 returns all parameters names.

**Table 2**

| ParamContext | |
|---|---|
| Sealed Class | |
| - Properties | |
| | ■ Inheritable {get; set;}: bool |
| | ■ Name {get; set;}: bool |

| - Methods | |
|---|---|
| | ■ AddParam (string name, object value, Type type): void |
| | ■ GetParam (string name): ParamContext |
| | ■ GetParamNames(): string[ ] |
| | ■ GetParams( ): ParamContext( ) |
| | ■ NavigationContext(PageContext page) |

The ParamContext class shown in Table 2 is an internal class that structures the information taken by the smart navigation service provider and stored. This structure is preferably not accessible by the web-page developer in order to prevent an improper use.

Furthermore, for this example embodiment, are illustrated below some steps to be followed by page developers in order to configure, at page-developing time, the smart navigation service SNS and activate the smart navigation functionality between two pages SP, TP .

The first step, step S1, is the initialization of the smart navigation service by the page developer.

At step S1, the MESPageContextProvider service is initialized by the page developer as shown in exemplary Table 3, Table 4 and Table 5. Optionally, this initialization is done automatically, if the pages SP, TP are created by the page-developer via a template so that the initialization is inherited by all the website pages SP, TP.

The MESPageContextProvider service is referenced into the web project. In the web.config of the web application, the page developer configures the section of Table 3 into assembly and the section of Table 4 into configuration.

**Table 3**

| |
|---|
| <add assembly="SITCAB.MesContextProvider, Version=6.5.0.0, Culture=neutral, PublicKeyToken=A25DDDB5F077262E"/> |

**Table 4**

| | |
|---|---|
| <section name="MESPageCtx" type="SIEMENS.SimaticIT.SITCAB.MESPageContextProvider.MESPa geContextProviderServiceSection, SITCAB.MESPageContextProvider, Version=6.5.0.0, Culture=neutral, PublicKeyToken=A25DDDB5F077262E"/> | |
| | |
| <MESPageCtx defaultProvider="CABStreamDataSourceConfigurationProvider" enabled="true"> | |
| | <providers> |
| | <add name="MESPageContextProvider" type="SIEMENS.SimaticIT.SITCAB.MESPageContextProv ider.MESPageContextProviderDefault, SITCAB.MESPageContextProvider, Version=6.5.0.0, Culture=neutral, |
| | PublicKeyToken=A25DDDB5F077262E"/> |
| | </providers> |
| </MESPageCtx> | |

In the code-behind the web page, the page developer can use the library in the way illustrated in Table 5.

**Table 5**

| | |
|---|---|
| using SIEMENS.SimaticIT.SITCAB.MESPageContextProvider; | |
| | |
| | protected void Page_Load(object sender, EventArgs e) |
| | { |
| MESPageContext Context = | |
| MESPageContextProviderStaticService.GetUserBaseContext HttpContext.Current.User.Identity.Name, HttpContext.Current.Session.SessionID, Service.GetComputerName); | |
| ... | |
| } | |

With the creation of the provider SNS, the base information about the user is automatically stored.

The second step, step S2, is the selection of the parameters to be stored from the source page SP at run-time. In fact, at runtime, the provider SNS stores the parameters that page developer wants to be accessible at the target page TP, as illustrated with exemplary Table 6.

**Table 6**

| |
|---|
| //store the name of the ProductionLine selected |
| //to be used into TargetPage |
| |
| protected void SelectCombo( object sender, EventArgs e ) |
| { |
| Context.AddParam("ProductionLine","string", |
| ProductionLineCombo.Selected) |
| } |

The third step, step S3, is the creation of a link between the source page SP and the target page TP by inserting the next page button NPB to the target page TP in the source page SP and by inserting the back page button to the source page SP in the target page.

In fact, at run time, in order to navigate to the target page TP, the end-user activates the next page button NPB inside the source page SP. And, in case she/her wishes to go back to the source page SP¹, activation of the back page button BPB is required at the target page TP. After the next or back page button NPB, BPB activation, the end-user is redirected to the desired page, target page TP or source-back page SP respectively.

The forth step, step S4, is the selection of the parameters to be shown at loaded target page TP at run-time as shown in exemplary table 7.

**Table 7**

| |
|---|
| //Show the detail of the production line selected |
| // into Source Page |
| protected void Page Load(object sender, EventArgs e) |
| { |
| LineGrid.ShowDetail (Context.GetPar("ProductionLine")); |
| } |

The fifth step, step S5, is the selection of the parameters to be available at source-back page SP at run-time.

In case, at run-time, the end-user activates the back button page BPB inside the target page TP in order to return to source-back page SP, all parameters stored by the source page SP, during step S2, are available in the context of the source back-page SP, and they can be used, if desired, at runtime as shown in exemplary table 8.

**Table 8**

| |
|---|
| //the user had checked that details are correct and can |
| //print the report. |
| //It is not necessary to select again the line. |
| protected void ButtonPrintReport_Click( object sender, EventArgs e ) |
| { |
| ReportControl.PrintReport(Context.GetPar("ProductionLine")); |
| } |

It is noted that in this particular example, only the parameter data are organized in a class. The other smart navigation information, the user data and the status navigation data, are managed automatically upon occurrence of given events, e.g. activation of a button or entering identification data. In other example embodiments, also the user data and the status navigation data may advantageously be organized in classes.

In addition to the above described embodiments and to the above illustrated particular example of the present invention, the skilled persons in the art will be able to arrive at a variety of other arrangements and steps which, if not explicitly described in this document, nevertheless fall within the scope of the appended claims.

## Claims

1. Method for enabling information exchange while switching between a source page (SP) and a target page (TP) in a drill-down navigation schema, developed with a .NET web application, wherein the target page (TP) can be loaded, at run-time, when the end-user activates a next-page button (NPB) located inside the source page (SP) and wherein the source page (SP) can be re-loaded, when, at run-time, the end-user activates the back-page button (BPB) located inside the target page (TP);
the method being **characterized in that** it comprises the steps of:
- providing a service (SNS), in form of a class library to be configured at page developing time, for managing information for smart navigation between the source page (SP) and the target page (TP), herein after called smart navigation service;
- the smart navigation service (SNS) being located, at run-time, in a given user-session and being able, upon-events, to collect, store and provide required smart navigation information (SNI) from and/or to the web-pages (SP, TP) of the given user-session; wherein the smart navigation information (SNI) comprising: parameter data, navigation status data and user data;
at page-developing time, configuring the smart navigation service (SNS) with the following steps:
- within the source and target pages (SP,TP), initializing the smart navigation service (SNS) using user data;
- within the source page (SP), providing to the smart navigation service (SNS) a first set of parameter data to be collected and stored;
- within the target page (TP), requiring, from the smart navigation service (SNS), a second set of parameter data to be utilized on the target page (TP) to be loaded,
at run time, the following steps are performed:
- by the smart navigation service (SNS), collecting and storing the values of the first set of parameter from the source page (SP) according to end-user selection;
- when the end-user switches from the source page (SP) to the target page (TP) by activating the next page button (NPB),the two following sub-sub steps are performed:
○ by the smart navigation service (SNS) collecting and storing navigation status data from the source page (SP);
○ loading the target page (TP) with a desired view depending on the value of the second set of parameter data provided by the smart navigation service (SNS),
- if the end-user switches back from the target page (TP) to the source page (SP) by activating the back page button (BPB), loading the source page (SP) with a desired view depending on the value of the first set of parameter data and of the status navigation data previously collected from the source page (SP), both data being provided by the smart navigation service (SNS).

2. The method according to claim 1, wherein a template web-page for the creation of source and target pages (SP, TP) is provided including custom configurations as the next page button (NPB), the back page button (BPB) and the initialization of the smart navigation service (SNS).

3. The method according to any of the previous claims, wherein the smart navigation service (SNS) is storing the smart navigation information (SNI) in the given user session or in a repository.

4. A system having means for performing the steps of the method according to any of the claims 1 to 3.

5. A computer program product stored on a computer usable medium, comprising computer readable program code for causing a computing device to perform the method of claims 1-3.

## Patentansprüche

1. Verfahren zum Ermöglichen eines Informationsaustauschs beim Wechseln zwischen einer Ausgangsseite (SP - source page) und einer Zielseite (TP - target page), die mit einer .NET-Web-Anwendung entwickelt wurden, in einem Drilldown-Navigationsschema, wobei die Zielseite (TP) während der Laufzeit geladen werden kann, wenn der Endbenutzer eine Weiter-Schaltfläche (NPB - next page button) betätigt, die sich in der Ausgangsseite (SP) befindet, und wobei die Ausgangsseite (SP) erneut geladen werden kann, wenn der Endbenutzer während der Laufzeit die Zurück-Schaltfläche (BPB - back page button) betätigt, die sich in der Zielseite (TP) befindet, wobei das Verfahren **dadurch gekennzeichnet ist, dass** es folgende Schritte umfasst:
- Bereitstellen eines Dienstes (SNS) in Form einer Klassenbibliothek, die zum Entwicklungszeitpunkt der Seite konfiguriert wird, zum Verwalten von Informationen für die intelligente Navigation zwischen der Ausgangsseite (SP) und der Zielseite (TP), nachfolgend als intelligenter Navigationsdienst bezeichnet,
- wobei sich der intelligente Navigationsdienst (SNS - smart navigation service) zur Laufzeit in einer gegebenen Benutzersitzung befindet und in der Lage ist, bei Ereignissen benötigte Informationen für die intelligente Navigation (SNI - smart navigation information) aus den und/ oder für die Webseiten (SP, TP) der gegebenen Benutzersitzung zu sammeln, zu speichern und bereitzustellen, wobei die Informationen für die intelligente Navigation (SNI) Folgendes umfassen: Parameterdaten, Navigationsstatusdaten und Benutzerdaten, Konfigurieren des intelligenten Navigationsdienstes (SNS) zum Zeitpunkt der Seitenentwicklung mit den folgenden Schritten:
- Initialisieren des intelligenten Navigationsdienstes (SNS) innerhalb der Ausgangs- und der Zielseite (SP, TP) unter Verwendung von Benutzerdaten,
- Bereitstellen eines ersten Satzes zu sammelnder und zu speichernder Parameterdaten für den intelligenten Navigationsdienst (SNS) innerhalb der Ausgangsseite (SP),
- Anfordern eines zweiten Satzes Parameterdaten, die auf der zu ladenden Zielseite (TP) benutzt werden sollen, von dem intelligenten Navigationsdienst (SNS) innerhalb der Zielseite (TP),
während der Laufzeit werden folgende Schritte ausgeführt:
- Sammeln und Speichern der Werte des ersten Satzes Parameter von der Ausgangsseite (SP) durch den intelligenten Navigationsdienst (SNS) gemäß einer Endbenutzerauswahl,
- wenn der Endbenutzer durch Betätigen der Weiter-Schaltfläche (NPB) von der Ausgangsseite (SP) zur Zielseite (TP) wechselt, werden die folgenden zwei Teilunterschritte ausgeführt:
• Sammeln und Speichern von Navigationsstatusdaten von der Ausgangsseite (SP) durch den intelligenten Navigationsdienst (SNS),
• Laden der Zielseite (TP) mit einer gewünschten Anzeige in Abhängigkeit vom Wert des zweiten Satzes Parameterdaten, die von dem intelligenten Navigationsdienst (SNS) bereitgestellt werden,
- wenn der Endbenutzer durch Betätigen der Zurück-Schaltfläche (BPB) von der Zielseite (TP) zur Ausgangsseite (SP) zurück wechselt, Laden der Ausgangsseite (SP) mit einer gewünschten Anzeige in Abhängigkeit vom Wert des ersten Satzes Parameterdaten und der Navigationsstatusdaten, die zuvor von der Ausgangsseite (SP) gesammelt wurden, wobei beide Daten von dem intelligenten Navigationsdienst (SNS) bereitgestellt werden.

2. Verfahren nach Anspruch 1, bei dem eine Vorlage-Internetseite für das Erstellen von Ausgangs- und Zielseite (SP, TP) bereitgestellt wird, einschließlich spezieller Konfigurationen für die Weiter-Schaltfläche (NPB), die Zurück-Schaltfläche (BPB) und die Initialisierung des intelligenten Navigationsdienstes (SNS) .

3. Verfahren nach einem der vorhergehenden Ansprüche, bei dem der intelligente Navigationsdienst (SNS) die Informationen für die intelligente Navigation (SNI) in der gegebenen Benutzersitzung oder in einem Repository speichert.

4. System mit Mitteln zum Ausführen der Schritte des Verfahrens nach einem der Ansprüche 1 bis 3.

5. Auf einem per Computer nutzbaren Medium gespeichertes Computerprogrammprodukt mit computerlesbarem Programmcode zum Veranlassen, dass eine Datenverarbeitungseinrichtung das Verfahren nach Anspruch 1 bis 3 ausführt.

## Revendications

1. Un procédé permettant un échange d'informations pendant une commutation entre une page source (SP) et une page cible (TP) dans un mécanisme de navigation à progression descendante, développé avec une application Web .NET, dans lequel la page cible (TP) peut être chargée, lors de l'exécution, lorsque l'utilisateur final active une touche page suivante (NPB) située à l'intérieur de la page source (SP) et dans lequel la page source (SP) peut être rechargée, lorsque, lors de l'exécution, l'utilisateur final active la touche page précédente (BPB) située à l'intérieur de la page cible (TP),
le procédé étant **caractérisé en ce qu'**il comprend les étapes suivantes :
- la fourniture d'un service (SNS), sous la forme d'une bibliothèque de classes à configurer au moment du développement de pages, destiné à la gestion d'informations pour une navigation intelligente entre la page source (SP) et la page cible (TP), ci-après appelée service de navigation intelligente,
- le service de navigation intelligente (SNS) étant situé, lors de l'exécution, dans une session utilisateur donnée et pouvant, en fonction d'événements, recueillir, conserver en mémoire et fournir des informations de navigation intelligente (SNI) requises de et/ou à des pages Web (SP, TP) de la session utilisateur donnée, les informations de navigation intelligente (SNI) comprenant : des données de paramètres, des données d'état de navigation et des données utilisateur,
au moment du développement de pages, la configuration du service de navigation intelligente (SNS) avec les étapes suivantes :
- à l'intérieur des pages sources et cibles (SP, TP), l'initialisation du service de navigation intelligente (SNS) au moyen de données utilisateur,
- à l'intérieur de la page source (SP), la fourniture au service de navigation intelligente (SNS) d'un premier ensemble de données de paramètres à recueillir et à conserver en mémoire,
- à l'intérieur de la page cible (TP), la demande, auprès du service de navigation intelligente (SNS), d'un deuxième ensemble de données de paramètres à utiliser sur la page cible (TP) à charger,
au moment de l'exécution, les étapes suivantes sont exécutées :
- par le service de navigation intelligente (SNS), le recueil et la conservation en mémoire des valeurs du premier ensemble de paramètres provenant de la page source (SP) selon une sélection de l'utilisateur final,
- lorsque l'utilisateur final commute de la page source (SP) vers la page cible (TP) par l'activation de la touche page suivante (NPB), les deux sous-sous étapes suivantes sont exécutées :
○ par le service de navigation intelligente (SNS), le recueil et la conservation en mémoire de données d'état de navigation provenant de la page source (SP),
○ le chargement de la page cible (TP) avec une vue souhaitée qui dépend de la valeur du deuxième ensemble de données de paramètres fourni par le service de navigation intelligente (SNS),
- si l'utilisateur final recommute de la page cible (TP) vers la page source (SP) par l'activation de la touche page précédente (BPB), le chargement de la page source (SP) avec une vue souhaitée qui dépend de la valeur du premier ensemble de données de paramètres et de données d'état de navigation recueillies antérieurement à partir de la page source (SP), les deux ensemble de données étant fournis par le service de navigation intelligente (SNS).

2. Le procédé selon la revendication 1, dans lequel une page Web modèle pour la création de pages sources et cibles (SP, TP) est fournie comprenant des configurations personnalisées en tant que touche page suivante (NPB), touche page précédente (BPB), et l'initialisation du service de navigation intelligente (SNS).

3. Le procédé selon l'une quelconque des revendications précédentes, dans lequel le service de navigation intelligente (SNS) est la conservation en mémoire des informations de navigation intelligente (SNI) dans la session utilisateur donnée ou dans un référentiel.

4. Un système possédant un moyen d'exécution des étapes du procédé selon l'une quelconque des revendications 1 à 3.

5. Un produit de programme informatique conservé en mémoire sur un support lisible par ordinateur, comprenant du code de programme lisible par ordinateur destiné à amener un dispositif informatique à exécuter le procédé selon l'une quelconque des revendications 1 à 3.
